# EUROPEAN PATENT APPLICATION

(11) **EP 4 674 995 A1**
(43) Date of publication of application: **07.01.2026**
(21) Application number: 23925443.6
(22) Date of filing: 27.12.2023
(51) Int. Cl.: C22B 34/36, B01J 20/22, B09B 3/80, B22F 1/00, C01B 32/949, C22B 3/12, C22B 3/24, C22B 5/10, C22C 1/051

(54) **TUNGSTEN POWDER MANUFACTURING METHOD, AND TUNGSTEN CARBIDE PRODUCT MANUFACTURING METHOD**

(30) Priority: 01.03.2023 JP 2023031158
(71) Applicant: Kyocera Corporation, Kyoto-shi, Kyoto 612-8501 (JP)
(72) Inventor: MAKINO, Takahiko, Kyoto-shi, Kyoto 612-8501 (JP); IWAI, Naoki, Kyoto-shi, Kyoto 612-8501 (JP)
(74) Representative: Viering, Jentschura & Partner mbB Patent- und Rechtsanwälte
(86) International application number: PCT/JP2023/046939
(87) International publication number: WO 2024/180893

(57) **Abstract**

A manufacturing method for tungsten powder according to a non-limiting example of the present disclosure is a manufacturing method for tungsten powder containing tungsten carbide as the main component and includes: preparing a raw material containing tungsten oxide; by using an alkaline solvent, obtaining a solution having the tungsten oxide eluted from the raw material; adding an adsorbent to the solution and reacting the adsorbent with the solution containing eluted tungsten to give a compound containing the adsorbent and tungsten; taking out the compound from the solution; mixing the compound with carbon powder to produce a mixture material; and firing the mixture material.

## Description

### TECHNICAL FIELD

The present disclosure relates to a manufacturing method for tungsten powder for use in the manufacturing of cutting inserts and the like, and a manufacturing method for a tungsten carbide product.

### BACKGROUND OF INVENTION

Tungsten powder is used in the manufacturing of tungsten carbide products such as cutting inserts. Tungsten powder is produced from ores containing tungsten (e.g., scheelite CaWO₄, hubnerite MnWO₄ and ferberite FeWO₄), or as described in Patent Document 1, it can be obtained through recovery process from products containing tungsten.

### CITATION LIST

### PATENT LITERATURE

Patent Document 1: WO 2015/129835

### SUMMARY

A manufacturing method for tungsten powder according to a non-limiting example of the present disclosure includes: preparing a raw material containing tungsten oxide; by using an alkaline solvent, obtaining a solution having the tungsten oxide eluted from the raw material; adding an adsorbent to the solution to cause the adsorbent to adsorb the tungsten oxide; extracting the adsorbent having the tungsten oxide adsorbed from the solution; mixing the adsorbent having the tungsten component adsorbed with carbon powder to produce a mixture material; and firing the mixture material.

### BRIEF DESCRIPTION OF THE DRAWINGS

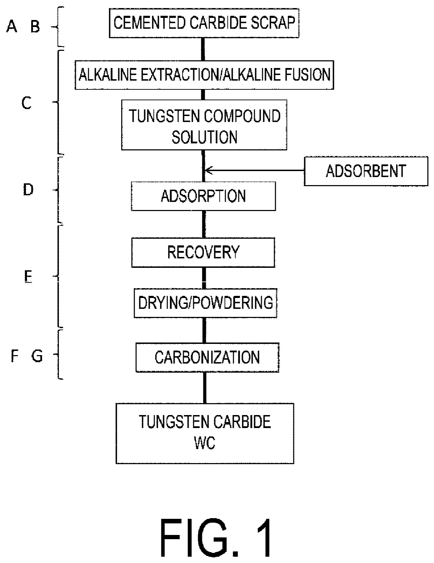

FIG. 1 is a flowchart illustrating an outline of a manufacturing method for tungsten powder according to a non-limiting example of the present disclosure.

### DESCRIPTION OF EMBODIMENTS

Tungsten powder is used in the manufacturing of tungsten carbide products such as cutting inserts. Tungsten powder is produced from ores containing tungsten (e.g., scheelite CaWO₄, hubnerite MnWO₄ and ferberite FeWO₄), or as described in Patent Document 1, it is obtained through a recovery process from products containing tungsten.

Further reduction in manufacturing costs of tungsten carbide powder is required.

### Manufacturing Method for Tungsten Powder

A manufacturing method (production method) for tungsten powder according to a non-limiting example of the present disclosure will be described.

In an embodiment, as illustrated in FIG. 1, the production method for tungsten powder includes Steps (A) to (G) set forth below.
(A) Step of preparing a raw material containing tungsten
(B) Step of oxidizing tungsten in the raw material to obtain tungsten oxide
(C) Step of, by using an alkaline solvent, obtaining a solution having the tungsten oxide eluted from the raw material
(D) Step of adding a metal compound adsorbent (hereinafter, referred to as an adsorbent in some cases) to the solution, and reacting the adsorbent with the solution containing the eluted tungsten to obtain a compound containing the adsorbent and the tungsten
(E) Step of taking out the compound from the solution
(F) Step of mixing the compound with carbon powder to produce a mixture material
(G) Step of heating the mixture material

### Step A

First, a raw material containing tungsten is prepared. Examples of the raw material include ores and scraps containing tungsten. Examples of the ore containing tungsten include scheelite (CaWO₄), hubnerite (MnWO₄), ferberite (FeWO₄), and wolframite ((Fe,Mn)WO₄). The scrap containing tungsten is an unwanted material generated in a production process of a product containing, as a main component, metal tungsten, tungsten carbide (WC), or the like. Specific examples thereof include scrap generated in a manufacturing process of cemented carbide tools and the like, hard scraps such as waste tools, and powdery soft scraps such as grinding sludge.

Cemented carbide, which is a type of super hard alloy, is mainly composed of metal tungsten or composite carbide such as tungsten carbide. The member mainly composed of the composite carbide contains iron, nickel, cobalt, or the like as a binder phase, and may contain TiC, TaC, NbC, VC, Cr₃C₂, or the like as an additive component, as necessary. Examples of the target material containing the cemented carbide to be treated include cutting tools (cutting inserts, drills, end mills, etc.), dies (forming rolls, forming dies, etc.), and civil engineering and mining tools (oil drilling tools, rock crushing tools, etc.).

### Step B

When the raw material contains tungsten in its non-oxide state, tungsten in the raw material is oxidized to give tungsten oxide. For example, when a waste cutting tool is prepared as the raw material, the cutting tool contains tungsten in the state of tungsten carbide. Therefore, the tungsten carbide is oxidized to give tungsten oxide.

Examples of the method for oxidizing tungsten include oxidation roasting. For example, oxidation roasting of a cutting tool containing tungsten carbide and cobalt gives a mixture of tungsten oxide (WO₃) and cobalt tungstate (CoWO₄).

As described above, Step A and Step B are intended to give tungsten oxide from a raw material, and thus these steps may be collectively expressed as a step of preparing a raw material containing tungsten oxide.

### Step C

The step in the recovery method is an alkaline extraction/alkaline melting process in which the metal component of the cemented carbide scrap is eluted into an alkaline solution to obtain a tungsten compound solution in which tungsten compound ions are dissolved. The method for obtaining the metal compound solution includes an alkaline extraction method or an alkaline melting method. The alkaline extraction method is a method in which scrap underwent oxidation roasting in advance is subjected to alkaline extraction with, for example, an aqueous NaOH solution. The alkaline fusion method is a method in which oxidization and dissolution are carried out at the same time by using a molten salt of a sodium salt such as NaNO₃, Na₂SO₄, Na₂CO₃, or NaOH.

For example, the alkaline extraction method is efficient for soft scrap due to its high reactivity and difficulty in control, and the alkaline fusion method is efficient for hard scrap because oxidation roasting can oxidize its surface portion only.

### Step D

An adsorbent according to the present embodiment is added to the tungsten compound solution obtained in Step C. The adsorbent according to the present embodiment adsorbs a metal compound present as a negative ion in a solution. Herein, as the adsorbing material according to the present embodiment, for example, a first adsorbent and/or a second adsorbent listed below can be used.

### First Adsorbent

The first adsorbent contains, as free amino acids, at least one type of first amino acids selected from the group consisting of alanine, cystine, methionine, tyrosine, lysine, valine, glutamic acid, histidine, proline, threonine, asparagine, glycine, isoleucine, ornithine, arginine, serine, citrulline, and cystathionine. The first adsorbent may contain the first amino acids as free amino acids (also referred to as a first free amino acid in some cases) in an amount equal to or greater than 10 mol% with respect to the total amount of free amino acids.

Thus, a simple treatment step can recover the metal compound. Moreover, a large amount of chemicals is not required to be used, and environmental pollution can be reduced.

Note that, the free amino acid in the adsorbent may be present as a solid, or may be present as a free amino acid upon dissolving in a solution. In any case, the adsorbent contains free amino acids in a solution, and use of these adsorbents makes it possible to recover the metal compound in a simple treatment step.

An example of the first adsorbent is a substance having free amino acids supported on the surface of the base material. As the base materials, a material forming an organism (hereinafter, referred to as a biological material in some cases) such as a peptide containing a free amino acid, a protein, and a microorganism; and/or an organic matter such as a resin, or an inorganic matter is applicable.

Examples of the microorganism include: bacteria such as E. coli (Escherichia coli), Bacillus sp., Thiobacillus ferrooxidans, Streptomyces rimosus, Pseudomonas sp., Bacillus thuringiensis, Arthrobacter nicotianae, Shewanella algae, and Shewanella oneidensis; yeasts such as Saccharomyces cerevisiae, Schizosaccharomyces pombe, Candida albicans, Yarrowia lipolytica, Pichia pastoris, Hansenula polymorpha, and Kluyveromyces lactis, and Aspergillus oryzae (ko̅ji mold).

The adsorbent made of the biological material is in various forms such as powder, pellets created from powder, gel, and aqueous solution. A pellet or powder is easy to store and/or to handle. When the adsorbent is a solid matter such as powder or a pellet, the solid matter may be once dissolved in another liquid such as water and then added to a solution containing a metal compound, or the solid matter may be directly added to a solution containing a metal compound and then stirred.

Preferably used is the first adsorbent containing: as free amino acids, at least one amino acid (hereinafter, referred to as a first-1 amino acid in some cases) selected from the group consisting of alanine, cystine, methionine, tyrosine, lysine, valine, glutamic acid, histidine, and proline among the first amino acids; at least one amino acid (hereinafter, referred to as a first-2 amino acid in some cases) selected from the group consisting of threonine, asparagine, glycine, isoleucine, ornithine, and arginine among the first amino acids; and at least one amino acid (hereinafter, referred to as a first-3 amino acid in some cases) selected from the group consisting of serine, citrulline, and cystathionine among the first amino acids. The adsorbent may further contain as a free amino acid at least one second amino acid selected from the group consisting of phosphoserine, aspartic acid, leucine, and phenylalanine at a ratio equal to or less than 40 mol% with respect to the total amount of free amino acids.

An adsorbent containing the first-1 amino acid, the first-2 amino acid, and the first-3 amino acid as free amino acids can increase the metal compound recovery efficiency.

When using such an adsorbent containing two or more types of the first-1 amino acids, the first-1 amino acid may be contained as a free amino acid and a content of each type of the amino acid may be a ratio equal to or greater than 5 mol% based on the total amount of free amino acids defined as 100 mol%. In particular, lysine may be contained in an amount equal to or greater than 10 mol% as a free amino acid. In such a case, the metal compound recovery efficiency is improved. The first-1 amino acid is contained in a total amount equal to or greater than 10 mol% as free amino acids. Thus, the metal compound recovery efficiency is improved.

The free amino acids composed of the first amino acids may be contained in a total amount equal to or greater than 0.5 mass% with respect to the total amount of the solid matter obtained by drying the adsorbent, that is, the solids content of the adsorbent. In such a case, the metal compound recovery efficiency is improved.

When aspartic acid and at least one amino acid selected from the group consisting of glutamic acid and valine are contained as free amino acids in the free amino acids, the content of at least one amino acid selected from the group consisting of glutamic acid and valine may be higher than the content of aspartic acid. By adjusting the pH of the solution to the acidic side, the free amino acids consisting of glutamic acid and valine have a positive zeta potential and adsorb metal compound ions (anions) in the solution. On the other hand, aspartic acid has low ability to adsorb metal compounds (ions). Therefore, when the content of at least one amino acid selected from the group consisting of glutamic acid and valine is larger than the content of aspartic acid among the free amino acids, the efficiency of adsorbing metal compounds is improved.

A free amino acid analysis (also referred to as biological amino acid analysis) can identify the type and content of free amino acids contained in the adsorbent. The content ratio of the total amount of free amino acids to the solids content of the adsorbent can be calculated from the mass of free amino acids in the adsorbent and the mass of the solids content of the adsorbent. When the adsorbent is a solid such as powder, the adsorbent is added to pure water at a temperature of 25°C, for example, and the resulting mixture is stirred for 10 minutes while rotating a magnetic stirrer at a rotation speed of 500 rpm to suspend the adsorbent. The suspension is used for free amino acid analysis. When the adsorbent is a solution, the free amino acids in the solution are analyzed, and the amount of the free amino acids can be calculated from the total amount of the free amino acids and the mass of the solids content of the adsorbent obtained by centrifuging the adsorbent solution. Note that, the mass of the solids content of the adsorbent is measured once the adsorbent is sufficiently dried under drying conditions such as 60°C for 24 hours.

The free amino acid contained in the biological material is supported on the surface of a base material with the base material being a peptide or protein. When the free amino acid is supported on a protein or peptide having a large molecular weight, the adsorbent is easier to handle, and a simple method such as filtration can concentrate the adsorbent when the adsorbent having the metal compound adsorbed is recovered from the solution containing the metal compound. The base material may be a resin or an inorganic matter other than a biological material, but when the base material is a biological material, the amount of free amino acids can be easily increased. In the first adsorbent, free amino acids are supported on the body surface of the microorganism.

When the base material of the adsorbent is a resin or an inorganic matter and the base material is in a form such as powder or a porous material having a large specific surface area, a large number of free amino acids can be supported on the surface of the base material. When the base material is a porous material, amino acids can also be supported on the inner walls of pores.

When the adsorbent is made of a biological material, an amino acid not contributing to the adsorption reaction (hereinafter, referred to as an inactive amino acid in some cases) is present other than free amino acids. As the inactive amino acid, mention may be made of, for example, an amino acid present at an intermediate position of amino acids linked by peptide bonds; or an amino acid present at an internal position not exposed on the surface of the adsorbent.

When the adsorbent is made of a biological material, conversion of the inactive amino acids into free amino acids by performing cleaving treatment of peptide bonds in inactive amino acids present in the adsorbent is effective to increase the content ratio of free amino acids in the adsorbent.

For example, when the organic matter is a microorganism, an existing treatment method can cleave peptide bonds present in the microorganism. Specifically, a proteolytic enzyme such as trypsin, "Lysylendopeptidase" (trade name), or V8 protease can decompose a protein constituting a microorganism. Thus, at least some of the inactive amino acids contained in the body of the microorganism can be converted into free amino acids. As another method for converting the inactive amino acid into free amino acids, a method is also effective in which the adsorbent is subjected to, for example, a heat treatment at a temperature equal to or higher than 60°C, a boiling treatment, or a heating and pressurizing treatment using an autoclave apparatus or the like and thereby decomposing proteins. Note that, when the adsorbent is an organism such as a microorganism, and the adsorbent is not needed to be stored in a solution and can be stored as a solid matter such as a decomposed inanimate matter, large-scale equipment and/or maintenance for culture and/or storage are not required, and the equipment can be downsized.

### Second Adsorbent

The second adsorbent contains at least one first amino acid selected from the group consisting of alanine, cystine, methionine, tyrosine, lysine, valine, glutamic acid, histidine, proline, threonine, asparagine, glycine, isoleucine, ornithine, arginine, serine, citrulline, and cystathionine, and at least a part of the first amino acid is present as a free amino acid once in the solution. The second adsorbent may contain the free amino acid of the first amino acid in a total amount equal to or greater than 10 mol% with respect to the total amount of the free amino acids.

That is, the second adsorbent is present as a solid, the solid contains no free amino acids, but the second adsorbent produces free amino acids once in a solution.

An example of the second adsorbent is a salt of the first amino acid. Examples of the salts include hydrochlorides, nitrates, sulfates, acetates and carbonates. The adsorbent made of a salt of an amino acid is dissolved in a liquid and then provides free amino acids. Same as, and/or similar to the first adsorbent, the second adsorbent is added to the solution having the metal compound dissolved and thereby adjusting pH and thus the zeta potential of the free amino acid of the adsorbent becomes a positive value. At this time, the metal compound is present as a negative ion, and thus positively charged free amino acids of the adsorbent adsorbs the negative ion of the metal compound.

In the second adsorbent, the content ratio of free amino acids in the absorbent can be increased as compared with a form in which free amino acids are supported on the surface of the base material. Therefore, the metal compounds are highly efficiently adsorbed, and a small amount of the adsorbent can adsorb a large amount of the metal compound. In the recovery of the metal compound after the metal compound has been adsorbed, unwanted substances that need to be discarded is small in amount, handling is easy, and manufacturing cost can be reduced. Since the adsorbent is not a living organism like bacteria or microorganisms, the adsorbent is easy to store and to maintain.

The adsorbent made of a salt which is the second adsorbent may be a solution, but if the adsorbent is solid, it is easy to store and maintain, and particularly if the adsorbent is powder, it can be easily dissolved in the solution. The adsorbent may be in the form of pellets to facilitate handling of the adsorbent.

As the salt of the first amino acid, when the salt of lysine and/or the salt of arginine is used as the main component, the adsorption efficiency of the adsorbent is good. For example, a salt containing lysine may be used as the adsorbent. Examples of the salt containing lysine as used herein include lysine hydrochloride, lysine sulfate, lysine nitrate, and lysine acetate.

Among them, lysine hydrochloride (e.g., L-lysine hydrochloride) is stable and inexpensive. When lysine hydrochloride is used as the adsorbent, unwanted elements are less likely to be included during acid treatment in downstream steps. Note that, the wording "the salt of lysine and/or the salt of arginine is used as the main component" means that the ratio of the total mass of the salt of lysine or the salt of arginine in the adsorbent is equal to or greater than 50 mass% with respect to the total amount of the adsorbent.

The total amount of the salt of lysine and the salt of arginine present in the adsorbent is preferably equal to or greater than 90 mass%. Thereby, a small amount of adsorbent can adsorb a large amount of metal compounds. A more preferable range of the total amount of the salt of lysine and the salt of arginine present in the adsorbent is equal to or greater than 95 mass%.

When a salt of glutamic acid is contained as the salt of the first amino acid, the cost of the adsorbent can be reduced. Among them, sodium glutamate is stable and inexpensive.

The content of the salt of glutamic acid present in the adsorbent is preferably equal to or greater than 90 mass%. Thereby, the metal compound can be recovered at low cost. A desirable range of the total amount of the salt of glutamic acid present in the adsorbent is equal to or greater than 95 mass%.

Note that, the free amino acid is not limited to one type, and for example, a salt of another type of the first amino acid such as lysine or arginine can be added together with the salt of glutamic acid.

For example, when the adsorbent is made of a microorganism, the adsorbent is added in an amount ranging from 1 g to 10 kg per 1 m3 of a tungsten compound solution whose tungsten concentration is adjusted to be within a range of from 0.1 to 10 mmol/l (the tungsten concentration is adjusted to be within a range of from 0.1 to 10 mmol per 1 liter of an alkaline solution). When the adsorbent is made of a salt of the first amino acid, for example, the adsorbent is added and thus the total addition amount of the salt of the first amino acid in the adsorbent accounts for a content ratio of from 0.2 to 1.1 mol per 1 mol of the metal component in the metal compound. Thereby, a small amount of adsorbent can adsorb a large amount of metal compounds such as tungsten compounds.

The total addition amount of the salts of the first amino acid may be from 10 to 300 g/l with respect to the metal compound solution. In such a case, the solution is not highly viscous, and the recovery efficiency of the metal compound is less likely to decrease. In particular, when the adsorbent is made of a salt of an amino acid, the solution is less likely to be highly viscous and the workability is good.

The temperature may be adjusted depending on the activity of the free amino acid, and usually it can be room temperature. The tungsten compound solution having added with the adsorbent is adjusted with hydrochloric acid or the like and thus the zeta potential of the free amino acid becomes a positive value. This adjustment allows the adsorbent to adsorb the tungsten compound ions as anions.

The solution has a pH less than 7 (acidic). When the free amino acid is lysine or arginine, the suitable pH is equal to or less than 4, preferably from 1 to 3, and desirably pH = from 1 to 2.3. When the free amino acid is glutamic acid, the preferred pH is equal to or less than 1.5. This pH can increase the recovery rate of the tungsten compound. Note that, either the step of adjusting pH of the solution or the step of adding the adsorbent to the solution containing the metal compound may precede.

When the adsorbent is a salt of the first amino acid, the recovery efficiency of the adsorbent is higher if the adsorption reaction is carried out within one hour. That is, the adsorbed metal compound may be partially desorbed from the free amino acid if the adsorption reaction is carried out more than one hour.

### Step E

The adsorbent having adsorbed the tungsten compound ions is taken out from the solution. As used herein, the wording "taking out" includes a step of filtration by which the compound is separated from the solution and a step of drying and powdering the compound recovered by filtration.

Specifically, the adsorbent having adsorbed the tungsten compound ions is filtered through filter paper or the like, whereby slurries of the compound are recovered on the filter paper. Thereafter, the recovered compound is dried and powdered and thereby enabling to take out a powdery tungsten compound containing the adsorbent. The tungsten compound containing the adsorbent as used herein refers to, for example, lysine-WO₄ or the like when the adsorbent is lysine.

### Steps F and G

A predetermined amount of carbon powder (such as carbon black, graphite powder, activated carbon) or carbon slurry is added as a reducing agent to the tungsten compound taken out, and then mixed (Step F). Then, the mixture material is heated to a temperature ranging from 1100 to 2000°C under the conditions of holding under a predetermined atmosphere for a predetermined time to perform a carbonization treatment, whereby tungsten powder containing tungsten carbide as the main component can be obtained (Step G). As used herein, the term "main component" means that tungsten carbide is the largest in terms of mass% among the components contained in the powder. Specifically, the powder contains the tungsten carbide in an amount equal to or greater than 99 mass%, while the powder may contain unavoidable impurities in an amount less than 1 mass%. Examples of the unavoidable impurities include carbon, hydrogen, nitrogen, oxygen, chromium, vanadium, tantalum, niobium, and titanium. More specifically, the powder contains the tungsten carbide in an amount equal to or greater than 99.2 mass%, and the powder may be substantially devoid of at least one carbide, nitride, or carbonitride selected from the group consisting of Groups IVa, Va, and VIa elements excluding W. The predetermined atmosphere mentioned above may be a reducing atmosphere including carbon monoxide, nitrogen, hydrogen, and methane.

In the carbonization step indicated in the present embodiment, the carbonization treatment is performed under a mixed atmosphere containing nitrogen and hydrogen as main components. When the carbonization treatment is carried out under the mixed atmosphere containing nitrogen and hydrogen as main components in this manner, the manufacturing cost is further reduced as compared with when the carbonization treatment is carried out in two separate steps under an atmospheres of nitrogen and under an atmospheres of hydrogen. Note that, the term "main component" means that the content of nitrogen and hydrogen in terms of mol% is more than the content of components other than nitrogen and hydrogen among the components contained in the gas. More specifically, the term "main component" refers to that the proportion of nitrogen is equal to or greater than 40 mol% and the proportion of hydrogen is equal to or greater than 10 mol%.

In general, the powder taken out in Step E is fired to remove the adsorbing material, and WO₃ is taken out. Oxygen is removed from the WO₃ through reduction treatment and thereby metal tungsten is taken out. Then, the metal tungsten is carbonized to afford tungsten carbide powder. However, for example, the step of removing the adsorbing material to take out WO₃ requires firing at a temperature equal to or higher than 300 (°C), and the reduction treatment of WO₃ requires a heat treatment at a temperature ranging from 800 (°C) to 950 (°C) under a reducing atmosphere (such as hydrogen gas atmosphere). Therefore, the tungsten carbide powder has incurred large cost.

On the other hand, the production method according to the present embodiment directly produces WC through carbonization treatment of the tungsten compound taken out through Step E mentioned above without going through the oxidation treatment and reduction treatment mentioned above. Therefore, the incurred cost for producing the tungsten carbide powder is reduced. In the carbonization of the tungsten compound, carbon powder is mixed to produce the mixture material, and then the mixture material is heated.

When the adsorbent is the organic matter listed above, carbon components contained in the adsorbent are used to carbonize tungsten and thereby making it possible to give WC. However, the carbon component contained in the adsorbent alone is likely to be not enough to provide carbon needed in Step G to carbonize tungsten, and hence not only WC but also W₂C is likely to be produced in the Step G.

In Step F of the production method according to the present embodiment, carbon powder is mixed with the tungsten compound, and thus the problem of carbon shortage described above is resolved, W₂C is less likely to be produced, and high purity WC powder can be produced.

The amount of the carbon powder added in Step F may be adjusted and thus the amount of carbon in the mixture material is equal to or greater than 5 mass%. In this case, tungsten is stably and easily carbonized in Step G, and hence W₂C is less likely to be produced and WC is likely to be produced.

The amount of carbon powder added in Step F may be adjusted and thus the carbon content in the mixture material is equal to or less than 6 mass%. The higher the carbon content in the mixture material is, the more stably and the more easily the tungsten is carbonized, while the carbon content in the mixture material is too high, a step of removing redundant carbon not bonded to tungsten after Step G is liable to become complicated. However, when the carbon content in the mixture material is equal to or less than 6 mass%, the incurred cost required to remove redundant carbon is small.

Note that, when the adsorbent is the organic matter listed above, the amount of carbon powder may be adjusted by taking the amount of the carbon component contained in the adsorbent into consideration. From another point of view, the carbon component in tungsten carbide may be derived not only from the carbon powder but also derived from the carbon component in the adsorbent. That is, the carbon in the tungsten powder may include the carbon in the adsorbent. When the adsorbent is the organic matter listed above and contains carbon, and the carbon in the tungsten powder contains the carbon in the adsorbent, the amount of carbon powder added in Step F can be reduced.

When the mixed atmosphere in Step G contains nitrogen and hydrogen as main components, the content ratio (mol%) of hydrogen may be smaller than or about the same as that of nitrogen. When the content ratio of hydrogen is smaller than that of nitrogen, coarse particles are less likely to be created. Note that the wording "the content ratio of hydrogen is about the same as that of nitrogen" does not require that the content ratio of hydrogen be exactly the same as the content ratio of nitrogen. The content ratio of hydrogen is regarded as "about the same as" that of nitrogen when (content ratio of nitrogen)/(content ratio of hydrogen) is within the range of from 0.9 to 1.1.

The method for recovering a metal compound according to the present embodiment can have reduced number of steps, and can use reduced amount of chemicals and/or can reduce the amount of waste liquid, and can recover a tungsten compound at low cost, as compared with known methods for recovering a metal compound.

The total amount of CO₂ emitted from the process according to the present application may be about 40% (in terms of energy) of the total amount of CO₂ emitted from a known ion exchange method for producing tungsten carbide via ammonium paratungstate/W metal powder. In this case, use of the process according to the present application in the production of tungsten carbide makes it possible to significantly reduce the amount of CO₂ emission.

### Manufacturing Method for Tungsten Carbide Product

Hereinafter, a manufacturing method for a tungsten carbide product according to a non-limiting example of the present disclosure will be described. Specifically, an explanation will be given for a manufacturing method for a tungsten carbide product, in which tungsten carbide powder obtained through the production method of the present disclosure is used as a raw material. Herein, a detailed explanation will be provided with an example of a manufacturing method for a cutting insert made from a raw material of tungsten carbide powder obtained through the production method of the present disclosure.

In an embodiment, the manufacturing method for a cutting workpiece includes the following Steps (X) and (Y).
(X) Step of mixing tungsten carbide powder with cobalt powder to form powder compact
(Y) Step of firing the powder compact

More specifically, first, cobalt powder is appropriately added to the tungsten carbide powder obtained by the production method of the present disclosure. At this time, carbon powder and/or metal powder other than cobalt powder may be added. Then, the mixed powder is wet-mixed for a predetermined time with a ball mill, dried, and then a known shaping method such as pressing, casting molding, extrusion, or cold isostatic pressing is utilized to shape the mixed powder into a predetermined tool shape and thereby giving a powder compact.

Thereafter, the powder compact is fired in a vacuum or a non-oxidizing atmosphere to produce a cutting insert. The surface of the produced cutting insert may be subjected to polishing process or honing process.

The surface of the cutting insert may be coated with a coating layer by using a chemical vapor deposition (CVD) process or a physical vapor deposition (PVD) process. Examples of the composition of the coating layer include titanium carbide (TiC), titanium nitride (TiN), titanium carbonitride (TiCN), and alumina (Al₂O₃).

In an embodiment, (1) a manufacturing method for tungsten powder containing tungsten carbide as a main component may include: preparing a raw material containing tungsten oxide; by using an alkaline solvent, obtaining a solution having the tungsten oxide eluted from the raw material; adding an adsorbent to the solution and reacting the adsorbent with the solution containing the eluted tungsten to obtain a compound containing the adsorbent and tungsten; taking out the compound from the solution; mixing the compound with carbon powder to produce a mixture material; and heating the mixture material.

(2) In the manufacturing method for tungsten powder according to (1), the adsorbent may be a salt containing lysine.

(3) In the manufacturing method for tungsten powder according to (2), the adsorbent may be lysine hydrochloride.

(4) In the manufacturing method for tungsten powder according to any of (1) to (3), an atmosphere in the heating of the mixture material may be a mixed atmosphere containing nitrogen and hydrogen as main components.

(5) In the manufacturing method for tungsten powder according to any of (1) to (4), carbon in the tungsten powder may include carbon in the adsorbent.

(6) In the manufacturing method for tungsten powder according to any of (1) to (5), a carbon content in the mixture material may be equal to or less than 6 mass%.

(7) In the manufacturing method for tungsten powder according to any of (1) to (6), a carbon content in the mixture material may be equal to or greater than 5 mass%.

(8) A manufacturing method for a tungsten carbide product may include: mixing the tungsten powder obtained by the manufacturing method for tungsten powder according to any of (1) to (7) with cobalt powder to form a powder compact; and firing the powder compact.

Hereinabove, the inventions according to the present disclosure have been described based on the embodiments. However, the inventions according to the present disclosure are not limited to the foregoing embodiments. That is, the inventions according to the present disclosure can be variously changed within the scope indicated in the present disclosure, and embodiments obtained by appropriately combining technical means disclosed in different embodiments are also included in the technical scope of the invention according to the present disclosure. That is, it is to be noted that those skilled in the art can easily make different variations or corrections based on the present disclosure. Note that these variations or corrections are included within the scope of the present disclosure.

Although the embodiments according to the present disclosure have been exemplified above, the present disclosure is not limited to the foregoing embodiments, and needless to say that any embodiment can be made without departing from the gist of the present disclosure.

## Claims

1. A manufacturing method for tungsten powder containing tungsten carbide as a main component, the manufacturing method comprising:
preparing a raw material containing tungsten oxide;
by using an alkaline solvent, obtaining a solution comprising the tungsten oxide eluted from the raw material;
adding an adsorbent to the solution and reacting the adsorbent with the solution containing eluted tungsten to give a compound containing the adsorbent and tungsten;
taking out the compound from the solution;
mixing the compound with carbon powder to produce a mixture material; and
heating the mixture material.

2. The manufacturing method for tungsten powder according to claim 1, wherein the adsorbent is a salt containing lysine.

3. The manufacturing method for tungsten powder according to claim 2, wherein the adsorbent is lysine hydrochloride.

4. The manufacturing method for tungsten powder according to any one of claims 1 to 3, wherein an atmosphere in the heating of the mixture material is a mixed atmosphere containing nitrogen and hydrogen as main components.

5. The manufacturing method for tungsten powder according to any one of claims 1 to 4, wherein carbon in the tungsten powder comprises carbon in the adsorbent.

6. The manufacturing method for tungsten powder according to any one of claims 1 to 5, wherein a carbon content in the mixture material is equal to or less than 6 mass%.

7. The manufacturing method for tungsten powder according to any one of claims 1 to 6, wherein a carbon content in the mixture material is equal to or greater than 5 mass%.

8. A manufacturing method for a tungsten carbide product, comprising:
mixing the tungsten powder obtained by the manufacturing method for tungsten powder according to any one of claims 1 to 7 with cobalt powder to form a powder compact; and
firing the powder compact.
